# FASCICULE DE BREVET EUROPEEN

(11) **EP 0 562 894 B1**
(45) Date de publication et mention de la délivrance du brevet: **06.05.1999**
(21) Numéro de dépôt: 93400538.0
(22) Date de dépôt: 02.03.1993
(51) Int. Cl.: G06F 15/16

(54) **Procédé de reconnaissance de données circulant sur un réseau de transmission de données et dispositif pour la mise en oeuvre de ce procédé**
Verfahren zum Erkennen von Umlaufdaten auf einem Datenübertragungsnetzwerk und Vorrichtung zur Verwirklichung des Verfahrens
Procedure for recognition of data circulating on a transmission data network and apparatus for implementing the same

(30) Priorité: 27.03.1992 FR 9203728
(43) Date de publication de la demande: 29.09.1993
(73) Titulaire: AEG SCHNEIDER AUTOMATION, 75016 Paris (FR)
(72) Inventeur: Aguilhon, Bernard, F-06270 Villeneuve-Loubet (FR); Karcher, Jean-François, F-06560 Valbonne (FR); Potiron, Jean-Hughes, F-06565 Valbonne (FR)
(74) Mandataire: Carias, Alain

(56) Documents cités:
- EP-A- 0 076 408
- EP-A- 0 130 802
- US-A- 4 870 571
- IBM TECHNICAL DISCLOSURE BULLETIN. vol. 29, no. 4, Septembre 1986, NEW YORK US pages 1625 - 1626 'INdexing method for fast random access to collated data'

## Description

La présente invention se rapporte d'une part à un procédé de reconnaissance de données circulant sur un réseau de transmission de données, consistant à recevoir, dans une station du réseau, des identifieurs constitués chacun par un champ de bits pour reconnaître si ces identifieurs font partie des identifieurs de référence attachés à ladite station et d'autre part à un dispositif pour la mise en oeuvre de ce procédé.

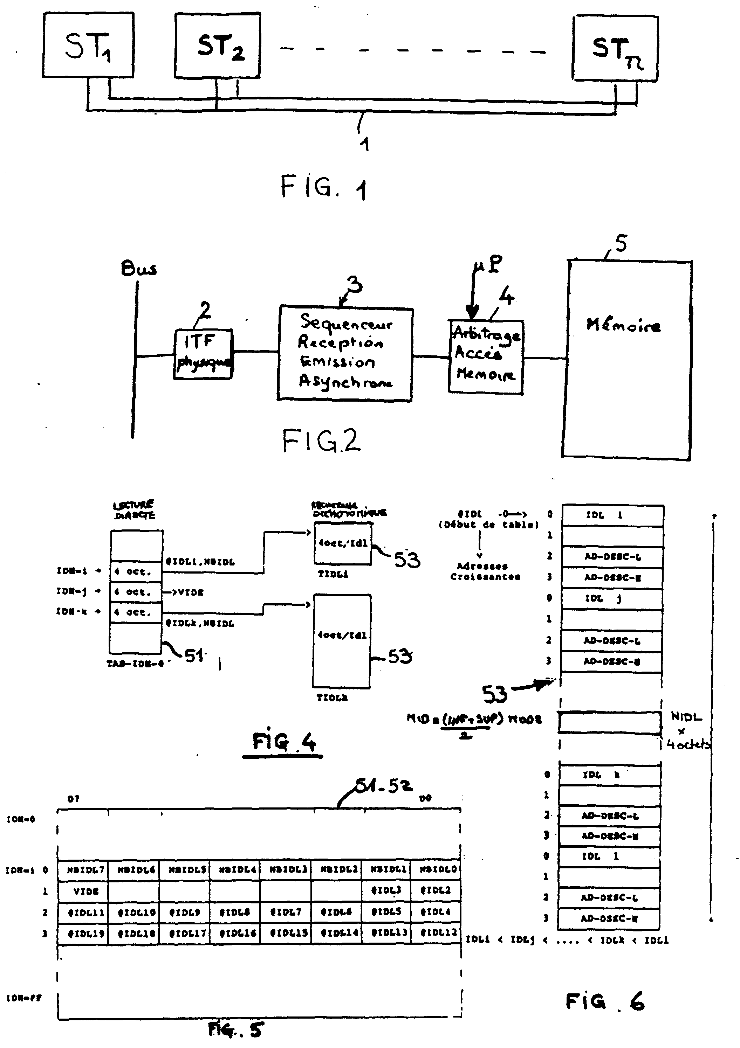

Un réseau de transmission de données notamment en milieu industriel (réseau dit de terrain par exemple) comprend, en se référant à la figure 1, des stations interconnectées, au travers d'interfaces de communication, par une ligne de transmission appelée bus. Chacune des stations doit émettre ou recevoir, sur le réseau, des données constituant chacune une trame, c'est à dire un ensemble indivisible de bits. A chaque donnée transmise correspond un identifieur qui est un champ de bits ou multiplet permettant d'identifier cette donnée.

L'identifieur qui est associé à chaque donnée diffusée sur le bus permet à chaque station de déterminer si cette donnée lui est destinée et si oui de donner des informations sur le service associé à cette donnée. Pour réaliser ces fonctions, chacune des stations comporte une mémoire contenant l'ensemble des identifieurs qui la concerne.

On connaît déjà des techniques pour reconnaître les identifieurs.

Une première technique connue voir par exemple EP-A-130 802 consiste à incorporer, à chaque station, une mémoire pouvant contenir tous les identifieurs possibles. A titre indicatif, cette mémoire aura 2¹⁶ entrées pour des identifieurs à 16 bits. Elle associe, à chaque identifieur concernant la station, l'adresse du descriptif de service correspondant. Cette technique présente l'avantage de la rapidité de reconnaissance puisque l'identifieur lui-même constitue l'adresse mémoire mais elle est pénalisante en espace mémoire.

Une seconde technique connue consiste à effectuer une recherche dichotomique dans une table d'identifieurs regroupant les identifieurs reconnus par la station, rangés par ordre croissant. La recherche dichotomique consiste à déterminer, par comparaisons successives, dans quelle moitié, puis dans quel quart, puis dans quel huitième, puis dans quel seizième, etc se trouve l'identifieur. Pour une capacité de 2ⁿ identifieurs, il faut effectuer n itérations de recherche dichotomique. Cette technique présente l'avantage de limiter l'espace mémoire mais demande un temps d'identification trop long pour garantir une performance acceptable, à débit élevé.

La présente invention a pour but de fournir un procédé et un dispositif de reconnaissance d'identifieurs minimisant, par rapport à la technique connue de recherche directe, l'espace mémoire occupé et accélérant, par rapport à la technique de recherche dichotomique, la rapidité d'identification. Cette technique permet donc de réduire le temps d'identification, tout en limitant la taille mémoire.

Le procédé selon l'invention est caractérisé par le fait qu'il consiste à utiliser un multiplet de poids fort d'un identifieur reçu pour lire dans une table de lecture directe, la taille et l'adresse d'une table de recherche contenant les multiplets de poids faible des identifieurs de référence de la station, et à effectuer une recherche dichotomique en comparant ces multiplets de référence avec le multiplet de poids faible de l'identifieur reçu.

Selon une caractéristique du procédé, la table de lecture directe contient un multiplet correspondant à la taille de la table de recherche dichotomique associée et un multiplet correspondant à l'adresse de cette table.

Selon une autre caractéristique du procédé, chaque table de recherche dichotomique contient les multiplets de poids faible attachés à la station et des descriptifs de service correspondants.

Le dispositif selon l'invention est caractérisé par le fait qu'il comporte:
- une mémoire dans laquelle se trouve au moins une table de lecture directe donnant pour chaque multiplet de poids fort reçu, l'adresse et la taille d'une table éventuellement associée de recherche dichotomique contenant les multiplets de poids faible de référence de la station;
- des moyens pour mémoriser le multiplet de poids faible de l'identifieur reçu;
- des moyens pour effectuer une recherche dichotomique du multiplet poids faible reçu dans lesdits multiplets poids faible de référence .

Selon une autre caractéristique, le dispositif comporte:
- des moyens pour stocker une valeur d'adresse dite de borne inférieure et une valeur d'adresse dite de borne supérieure et des moyens pour calculer une moyenne de ces valeurs;
- des moyens pour comparer le multiplet de poids faible de la table de recherche qui correspond à la valeur moyenne d'adresse calculée et le multiplet de poids faible de l'identifieur reçu et pour charger la valeur moyenne soit dans les moyens pour stocker une valeur d'adresse dite de borne supérieure soit dans les moyens pour stocker une valeur d'adresse dite de borne inférieure.

Selon une autre caractéristique, le dispositif comporte des moyens pour stocker le multiplet de poids fort de l'identifieur reçu, des moyens pour stocker l'adresse de base de la table de lecture directe et pour additionner ces valeurs et délivrer une adresse correspondant à la somme, à la mémoire.

Selon une autre caractéristique, le dispositif comporte des moyens pour stocker l'adresse de base de la table de recherche et pour additionner cette adresse de base à la valeur moyenne et délivrer une adresse correspondant à la somme, à la mémoire.

Selon une caractéristique, le dispositif comporte des moyens pour stocker le multiplet de poids faible lu dans la table de recherche et correspondant à la valeur d'adresse moyenne de ladite table et des moyens pour comparer le multiplet de poids faible reçu et le dit multiplet de poids faible lu.

L'invention va maintenant être décrite avec plus de détails en se référant à un mode de réalisation donné à titre d'exemple et représenté par les dessins annexés sur lesquels :
- la figure 1 est un schéma de réseau de transmission de données entre stations ;
- la figure 2 est un schéma fonctionnel du dispositif de reconnaissance de données selon l'invention ;
- la figure 3 est un schéma fonctionnel détaillant la figure 2;
- la figure 4 est un schéma de la configuration mémoire ;
- la figure 5 illustre le contenu de la table de lecture directe de la figure 4;
- la figure 6 illustre le contenu d'une des tables de recherche dichotomique des octets faibles des identifieurs.

On a représenté, sur la figure 1, plusieurs stations ST₁, ST₂ ... STₙ destinées à échanger entre elles des données numériques, par exemple des variables et/ou des messages par l'intermédiaire d'un bus de données série 1, du type à diffusion.

Chaque station comprend, en se référant à la figure 2, un bloc d'interface physique 2 qui implémente la couche physique du bus et un bloc séquenceur émission/réception asynchrone 3 qui reconnait toute donnée circulant sur le bus et qui, lorsqu'un identifieur est reconnu, émet ou reçoit les données associées. Elle comprend aussi une mémoire 5 de type RAM et un microprocesseur. Un bloc 4 gère le partage de la mémoire 5, entre le microprocesseur de la station et le bloc émission-réception 3.

La trame diffusée sur le bus série 1 comporte un identifieur qui est composé de deux multiplets dont l'un est le multiplet de poids fort et dont l'autre est le multiplet de poids faible. Dans le procédé et le dispositif qui sont décrits ici, l'identifieur présente 16 bits et les deux multiplets sont des octets. L'un est l'octet de poids fort et l'autre est l'octet de poids faible. Dans la suite de la description on distinguera les identifieurs reçus qui sont les identifieurs présents sur le bus et reçus par la station et les identifieurs de référence qui sont les identifieurs attachés à la station et emmagasinés dans la mémoire 5.

Une table de lecture directe 51 et des tables associées 53 de recherche dichotomique sont emmagasinées dans la mémoire RAM 5. La table 51 (référencée également TAB-IDH sur la figure 4) sert à la lecture directe des octets de poids fort des identifieurs de et les tables associées 53 (référencées également TIDLi sur la figure 4) servent à la recherche dichotomique des octets de poids faible relatifs aux mêmes identifieurs Le nombre de tables 53 est égal au nombre d'octets de poids fort affectés aux identifieurs de référence attachés à la station.

La table 51 de lecture directe des octets de poids fort contient, pour chaque octet fort (repéré IDHi sur les figures 4 et 5), d'une part le nombre d'octets (NBIDL7-0) de la table associée 53 de recherche dichotomique des octets de poids faible correspondant à cet octet fort, d'autre part l'adresse (repérée @IDL19-0 sur la figure 5) du début de cette table 53 et un bit ( désigné VIDE) permettant de savoir si, à l'entrée de la table 51 considérée, correspond une table 53 associée de recherche dichotomique des octets de poids faible.

Plus précisément, pour chaque octet fort IDHi concernant la station, la table 51 (TAB-IDH) contient l'adresse repérée @IDL de la table 53 (TIDLi) des seuls octets de poids faibles(IDLi) utilisés par la dite station, ces octets étant rangés par ordre croissant.

Chaque table 53 de recherche dichotomique des octets de poids faible contient, en se référant à la figure 6), d'une part les octets de poids faible (IDLi -figure 6) des identifieurs et d'autre part les adresses de renvoi pour décrire les services associés (AD-DESC).

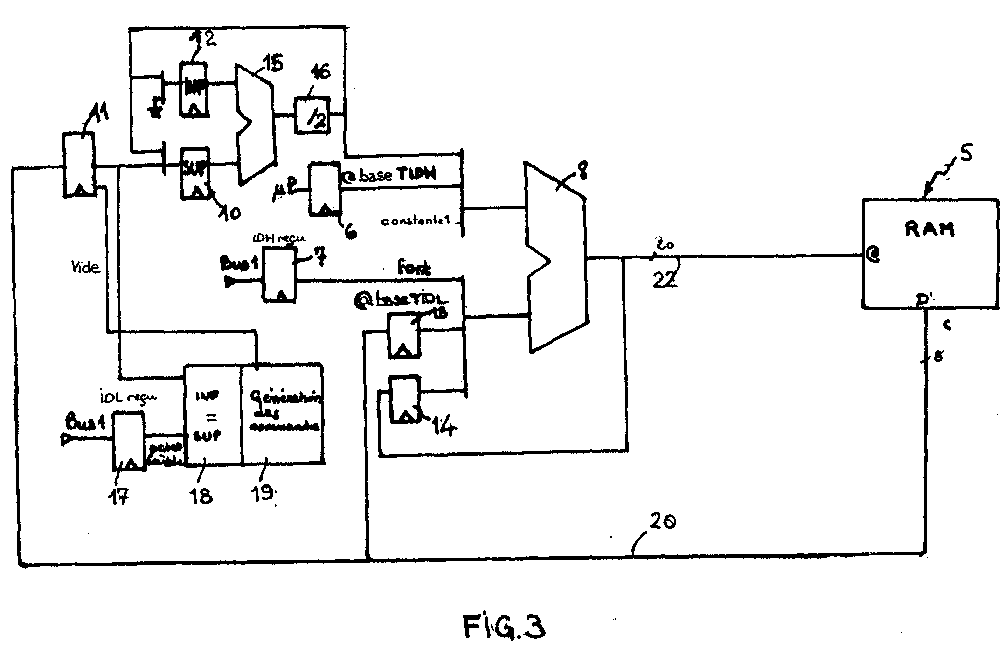

La figure 3 représente le bloc d'émission/réception 3 assurant la reconnaissance des identifieurs reçus du bus 1.

L'octet fort et l'octet faible d'un identifieur reçu du bus 1 sont stockés respectivement dans des registres internes 7 et 17. Le registre 7 est relié via un multiplexeur à un additionneur 8. Cet additionneur 8 est relié à un bus d'adresses 22, à 20 bits, qui transporte les adresses à la mémoire 5.

Deux registres d'adresse 13 et 14, à 20 bits, destinés à contenir des adresses, sont connectés à l'additionneur 8 Le registre d'adresse 13 se charge en trois parties (inférieure, moyenne, supérieure) avec l'adresse de base de la table 53. Le registre d'adresse 14 reçoit l'adresse du bus 22.

Un registre d'adresse 6 est chargé par le microprocesseur avec l'adresse de base de la table 51 de lecture directe. Son contenu est destiné à être transféré dans l'additionneur 8.

Un registre 11 est relié en entrée au bus de données 20 et en sortie à un registre 10 dit de borne supérieure travaillant avec un registre 12 de borne inférieure. Les contenus de ces registres 12 et 10 sont destinés à être transférés à un additionneur 15 dont la sortie, divisée par deux, via un dispositif câblé 16, reboucle sur les entrées de ces registres 12 et 10 et est connectée, via un multiplexeur, à l'entrée de l'additionneur 8. Le registre 10 de borne supérieure contient une adresse "forte" de la table 53 tandis que le registre 12 de borne inférieure contient une adresse "faible" de la table 53, les qualificatifs "faible" ou "fort" se référant aux adresses croissantes de la table 53.

Le bloc 18 permet de comparer l'octet poids faible de l'identifieur reçu et contenu dans le registre 17 avec l'octet IDL lu en table TIDL et contenu dans le registre 11.

Le bloc 19 séquence les commandes des différentes ressources relatives aux opérations de recherche d'identifieur qui ont été décrites ci-dessus.

A la configuration de la station, le microprocesseur charge le registre 6 avec l'adresse de base de la table de recherche directe 51 (TIDH).

Lorsqu'un identifieur présent sur le bus 1 est reçu par le dispositif, l'octet fort de cet identifieur reçu est chargé dans le registre 7. L'adresse de base de la table 51 (TIDH) qui est contenue dans le registre 6 et l'octet fort de l'identifieur reçu qui est contenu dans le registre 7 sont additionnés par l'additionneur 8. Les accès lecture dans la mémoire 5, à travers l'additionneur 8, s'effectuent à l'adresse qui est la somme des registres 6 et 7, donc dans la table 51. L'octet fort de l'identifieur est une adresse à accès immédiat.

A titre indicatif, le bus d'adresses 22 pour accéder à la mémoire 5 est un bus à 20 bits. Les deux bits de poids faibles sont nuls et l'adresse où s'effectue la lecture dans la mémoire 5 est donc un multiple de 4.

La table de lecture directe 51 comporte 4 octets consécutifs pour chaque octet fort.

Le premier octet (NBIDL) est lu à l'adresse définie ci-dessus ( égale à l'adresse de base + IDHi) et il correspond à la taille de la table 53 de recherche dichotomique des octets faibles.

La donnée de lecture de ce premier octet (taille) est rangée dans le registre 10, via le registre 11. En même temps, l'adresse (résultant de l'addition évoquée ci-dessus) est mémorisée dans le registre interne 14. On l'additionne avec une constante égale à 1. Le résultat de cette nouvelle addition est la deuxième adresse permettant la lecture du second octet (comprenant le bit "Vide") de la table 51 (TIDH). Ce second octet est chargé dans le registre 11 pour examiner l'état "vide" (génération de commande) et dans la partie inférieure du registre 13 (bits IDL 3-2).

La lecture des 2 derniers octets est conditionnée par l'état du bit "Vide" (deuxième octet -figure 5).

Si le bit "Vide" est égal à 0, on effectue la lecture des troisième et quatrième octets de la table TIDH pour les charger respectivement en partie moyenne et supérieure du registre 13.

Si le bit vide est égal à 1, la station ne reconnaît aucun identifieur ayant cet octet fort. et la recherche est terminée.

Les deux bits faibles de l'adresse @IDL19-0 étant égaux à 0, cette adresse est un multiple de 4.

La recherche dichotomique qui suit est conditionnée par le chargement, dans le registre 17, de l'octet poids faible de l'identifieur reçu.

Au début de la recherche dichotomique, le registre 12 de borne inférieure contient une valeur 0 tandis que le registre 10 de borne supérieure contient la valeur du nombre d'octets faibles NBIDL de la table de recherche dichotomique 53 ( c'est à dire la taille de cette table 53).

Lors de la première opération, l'additionneur 15 calcule la moyenne MID de la valeur contenue dans le registre 12 de borne inférieure et de la valeur contenue dans le registre 10 de borne supérieure. Cette valeur moyenne MID est additionnée à l'adresse de base contenue dans le registre 13, par l'intermédiaire de l'additionneur 8. La lecture correspondante effectuée dans la mémoire 5 par le bus de données 20 est un octet IDL de référence qui est stocké dans le registre 11.

On fait la comparaison de cette valeur de référence IDL lue et stockée dans le registre 11 avec la valeur de l'octet faible relatif à l'identifieur reçu sur le bus et stocké dans le registre 17. Si l'octet faible IDL reçu et contenu dans le registre 17 est supérieur à l'octet faible IDL de référence (lu à l'adresse @IDL) alors le registre 12 de borne inférieure prend la valeur MID définie ci-dessus. Si l'octet faible IDL reçu et contenu dans le registre 17 est inférieur à l'octet faible IDL de référence (lu à l'adresse @IDL) alors c'est le registre 10 de borne supérieure qui prend la valeur MID.

Suivant la comparaison de la recherche dichotomique, on charge donc soit le registre 10 de borne supérieure soit le registre 12 de borne inférieure de la valeur MID calculée.

Les calculs de la valeur MID, les comparaisons, les chargements des registres 10 ou 12 se poursuivent jusqu'à ce que la valeur de l'octet faible de référence IDL stocké dans la table 53 soit égale à la valeur de l'octet faible reçu et stocké dans le registre 17 ou bien jusqu'à ce que l'on ait atteint le nombre maximum d'itérations, lié à la taille de la table 53 (TIDL). La recherche s'arrête, l'identifieur étant trouvé dans la table. Un signal adéquat est activé et envoyé à destination de la station.

Les commandes du bloc 18 déclenchent le rechargement du registre 12 de borne inférieure ou du registre 13 de borne supérieure.

Il est possible d'utiliser deux tables 51 et 52 de reconnaissance des octets hauts des identifieurs (TAB-IDH et TAB-IDHI), ces tables étant adressables à deux adresses différentes. Cette solution permet de disposer d'une fonction de modification des identifieurs d'une station en cours de fonctionnement.

Il est bien entendu que l'on peut sans sortir du cadre de l'invention imaginer des variantes et des perfectionnements de détails et de même envisager l'emploi de moyens équivalents.

En fonction des contraintes de vitesse et d'encombrement à respecter, il est possible d'utiliser un autre fractionnement des identifieurs entre les deux types de table 51 et 53. Par exemple on pourrait utiliser une table 51 à 12 entrées pour l'adressage direct sur les 12 premiers bits et des tables 53 limitées aux seuls quartets utiles pour les quatres derniers bits. Le temps d'accès serait plus court que dans la solution décrite précédemment mais la taille mémoire serait supérieure.

## Revendications

1. Procédé de reconnaissance de données constituées de bits et circulant sur un réseau de transmission de données, consistant à recevoir, dans une station du réseau, des identifieurs constitués chacun par un champ de bits pour reconnaître si ces identifieurs font partie des identifieurs de référence attachés à ladite station, caractérisé par le fait qu'il consiste à utiliser un multiplet (IDH) de poids fort d'un identifieur reçu pour lire dans une table de lecture directe (51), la taille et l'adresse d'une table de recherche (53) contenant les multiplets de poids faible des identifieurs de référence de la station, et à effectuer une recherche dichotomique en comparant ces multiplets de référence avec le multiplet de poids faible de l'identifieur reçu.

2. Procédé selon la revendication 1, caractérisé par le fait que la table de lecture directe (51) contient un multiplet correspondant à la taille de la table (53) de recherche dichotomique associée et un multiplet correspondant à l'adresse de cette table (53).

3. Procédé selon l'une quelconque des revendications précédentes, caractérisé par le fait que chaque table (53) de recherche dichotomique contient les multiplets de poids faible attachés à la station et des descriptifs de service correspondants.

4. Procédé selon l'une quelconque des revendications précédentes, caractérisé par le fait que la table de lecture directe (51) contient un bit permettant de déterminer si une table de recherche (53) des multiplets de poids faible est associée à la table de lecture (51).

5. Dispositif pour la mise en oeuvre du procédé selon l'une quelconque des revendications précédentes, caractérisé par le fait qu'il comporte:
- une mémoire (5) dans laquelle se trouve au moins une table de lecture directe (51) donnant pour chaque multiplet de poids fort reçu, l'adresse (@IDL) et la taille (NBIDL) d'une table (53) éventuellement associée de recherche dichotomique contenant les multiplets de poids faible (IDL) de référence de la station;
- des moyens (17) pour mémoriser le multiplet de poids faible (IDL) de l'identifieur reçu;
- des moyens (11,18,19,12,10,15,16) pour effectuer une recherche dichotomique du multiplet poids faible reçu dans lesdits multiplets (IDL) poids faible de référence .

6. Dispositif selon la revendication 5, caractérisé par le fait qu'il comporte :
- des moyens (10,12) pour stocker une valeur d'adresse dite de borne inférieure et une valeur d'adresse dite de borne supérieure et des moyens (15,16) pour calculer une moyenne (MID) de ces valeurs;
- des moyens (11,17,18) pour comparer le multiplet (IDL) de poids faible de la table de recherche (53) qui correspond à la valeur moyenne d'adresse calculée (MID) et le multiplet de poids faible de l'identifieur reçu et pour charger la valeur moyenne (MID) soit dans les moyens (10) pour stocker une valeur d'adresse dite de borne supérieure soit dans les moyens (12) pour stocker une valeur d'adresse dite de borne inférieure.

7. Dispositif selon l'une quelconque des revendications 5 ou 6, caractérisé par le fait qu'il comporte des moyens (7) pour stocker le multiplet (IDH) de poids fort de l'identifieur reçu, des moyens (6) pour stocker l'adresse de base de la table de lecture directe (51) et pour additionner ces valeurs et délivrer une adresse correspondant à la somme, à la mémoire (5) .

8. Dispositif selon l'une quelconque des revendications 5 à 7, caractérisé par le fait qu'il comporte des moyens (13) pour stocker l'adresse de base (TIDL) de la table de recherche (53) et pour additionner cette adresse de base à la valeur moyenne (MID) et délivrer une adresse correspondant à la somme, à la mémoire (5).

9. Dispositif selon l'une quelconque des revendications 5 à 8, caractérisé par le fait qu'il comporte des moyens (11) pour stocker le multiplet de poids faible (IDL) lu dans la table de recherche (53) et correspondant à la valeur d'adresse moyenne de ladite table et des moyens (18) pour comparer le multiplet de poids faible reçu et le dit multiplet de poids faible lu.

10. Dispositif selon l'une quelconque des revendications 5 à 9, caractérisé par le fait qu'il comporte des moyens (19) pour séquencer les commandes.

## Patentansprüche

1. Erkennungsverfahren von aus Bits bestehenden und auf einem Datenübertragungsnetz umlaufenden Daten, das darin besteht, in einer Station des Netzes Identifizierer zu empfangen, die jeweils aus einem Bitfeld bestehen, um zu erkennen, ob diese Identifizierer Bestandteil der Referenzidentifizierer der besagten Station sind, dadurch gekennzeichnet, dass es darin besteht, ein hochwertiges Byte (IDH) eines empfangenen Identifizierers zu verwenden, um in einer Direktlesetabelle (51) die Grösse und die Adresse einer Suchtabelle (53) zu lesen, die die niedrigwertigen Bytes der Referenzidentifizierer der Station enthält, und um eine dichotomische Suche durchzuführen, durch Vergleichen dieser Referenzbytes mit dem niedrigwertigen Byte des empfangenen Identifizierers.

2. Verfahren nach Anspruch 1, dadurch gekennzeichnet, dass die Direktlesetabelle (51) ein Byte enthält, das der Grösse der zugeordneten dichotomischen Suchtabelle (53) entspricht, und ein Byte, das der Adresse dieser Tabelle (53) entspricht.

3. Verfahren nach einem der vorstehend genannten Ansprüche, dadurch gekennzeichnet, dass jede dichotomische Suchtabelle (53) niedrigwertige Bytes enthält, die der Station zugeordnet sind, sowie die entsprechenden Service-Beschreibungen.

4. Verfahren nach einem der vorstehend genannten Ansprüche, dadurch gekennzeichnet, dass die Direktlesetabelle (51) ein Bit enthält, mit dem ermittelt werden kann, ob eine Suchtabelle (53) der niedrigwertigen Bytes einer Lesetabelle (51) zugeordnet ist.

5. Vorrichtung zur Umsetzung des Verfahrens nach einem der vorstehend genannten Ansprüche, dadurch gekennzeichnet, dass sie umfasst :
- einen Speicher (5), in dem sich mindestens eine Direktlesetabelle (51) befindet, die für jedes empfangene hochwertige Byte die Adresse (@IDL) und die Grösse (NBIDL) einer eventuell zugeordneten dichotomischen Suchtabelle (53) angibt, die die niedrigwertigen Referenzbytes (IDL) der Station enthäl ;
- Mittel (17) zum Speichern des niedrigwertigen Bytes (IDL) des empfangenen Identifizierers ;
- Mittel (11, 18, 19, 12, 10, 15, 16) zur dichotomischen Suche des empfangenen niedrigwertigen Bytes in den besagten niedrigwertigen Referenzbytes (IDL).

6. Vorrichtung nach Anspruch 5, dadurch gekennzeichnet, dass sie umfasst :
- Mittel (10, 12) zum Speichern eines sogenannten niedrigen Adresswertes und eines sogenannten hohen Adresswertes, sowie Mittel (15, 16) zur Berechnung eines diesbezüglichen Mittelwertes (MID) ;
- Mittel (11, 17, 18) zum Vergleichen des niedrigwertigen Bytes (ODL) der Suchtabelle (53), der dem berechneten Adressenmittelwert (MID) entspricht, mit dem niedrigwertigen Byte des empfangenen Identifizierers, und zum Laden des Mittelwertes (MID) entweder in den Mitteln (10) zum Speichern eines sogenannten hohen Adresswertes oder in den Mitteln (12) zum Speichern eines sogenannten niedrigen Adresswertes.

7. Vorrichtung nach einem der Ansprüche 5 oder 6, dadurch gekennzeichnet, dass sie Mittel (7) zum Speichern des hochwertigen Bytes (IDH) des empfangenen Identifizierers umfasst, sowie Mittel (6) zum Speichern der Basisadresse der Direktlesetabelle (51) und zum Addieren dieser Werte und zur Ausgabe einer der Summe entsprechenden Adresse an den Speicher (5).

8. Vorrichtung nach einem der Ansprüche 5 bis 7, dadurch gekennzeichnet, dass sie Mittel (13) zum Speichern der Basisadresse (TIDL) der Suchtabelle (53) umfasst, sowie zum Addieren dieser Basisadresse und des Mittelwertes (MID) und zur Ausgabe einer dieser Summe entsprechenden Adresse an den Speicher (5).

9. Vorrichtung nach einem der Ansprüche 5 bis 8, dadurch gekennzeichnet, dass sie Mittel (11) zum Speichern des in der Suchtabelle (53) gelesenen und dem mittleren Adresswert der besagten Tabelle entsprechenden niedrigwertigen Byte (IDL) umfasst, sowie Mittel (18) zum Vergleichen des empfangenen niedrigwertigen Bytes mit dem besagten gelesenen niedrigwertigen Byte.

10. Vorrichtung nach einem der Ansprüche 5 bis 9, dadurch gekennzeichnet, dass sie Mittel (19) zum Takten der Befehle umfasst.

## Claims

1. Process for the recognition of data composed of bits circulating on a data transmission network, consisting of receiving identifiers in a network station, each identifier being composed of a field of bits to recognize if these identifiers are included in reference identifiers attached to the said station, characterized by the fact that it consists of using a high order multiplet (IDH) of a received identifier to read in a direct readout table (51) to find the size and address of a search table (53) containing low order multiplets of station reference identifiers, and to make a dichotomic search by comparing these reference multiplets with the low order multiplet of the received identifier.

2. Process according to claim 1, characterized by the fact that the direct readout table (51) contains a multiplet corresponding to the size of the associated dichotomic search table (53) and a multiplet corresponding to the address of this table (53).

3. Process according to any one of the previous claims, characterized by the fact that each dichotomic search table (53) contains the low order multiplets attached to the station and the corresponding service descriptions.

4. Process according to any one of the previous claims, characterized by the fact that the direct readout table (51) contains a bit used to determine if a low order multiplets search table (53) is associated with the readout table (51).

5. Device for embodiment of the process according to any one of the previous claims, characterized by the fact that it comprises:
- a memory (5) containing at least one direct readout table (51) which, for each received high order multiplet, contains the address (@IDL) and size (NBIDL) of a dichotomic search table (53) that may be associated with the station, and containing the reference low order multiplets (IDL) for the station;
- means (17) of memorizing the low order multiplet (IDL) of the received identifier;
- means (11, 18, 19, 12, 10, 15, 16) of carrying out a dichotomic search for the low order multiplet received in the said reference low order multiplets (IDL).

6. Device according to claim 5, characterized by the fact that it comprises:
- means (10, 12) of storing an address value called the low limit and an address value called the high limit, and means (15,16) of calculating an average (MID) of these values;
- means (11, 17, 18) of comparing the low order multiplet (IDL) in the search table (53) that corresponds to the calculated average address value (MID) and the low order multiplet of the received identifier, and of loading the average value (MID) either into means (10) of storing a "high limit" address value or in means (12) of storing a "low limit" address value.

7. Device according to any one of claims 5 or 6, characterized by the fact that it comprises means (7) of storing the high order multiplet (IDH) of the received identifier, means (6) of storing the base address of the direct readout table (51) and for adding these values and storing an address corresponding to the sum, in memory (5).

8. Device according to any one of claims 5 to 7, characterized by the fact that it comprises means (13) of storing the base address (TIDL) of the search table (53) and of adding this base address to the average value (MID) and storing an address corresponding to the sum, in memory (5).

9. Device according to any one of claims 5 to 8, characterized by the fact that it comprises means (11) of storing the low order multiplet (IDL) read in the search table (53) and corresponding to the average address value of the said table and means (18) of comparing the received low order multiplet and the said read low order multiplet.

10. Device according to any one of claims 5 to 9, characterized by the fact that it comprises means (19) of sequencing commands.
